# EUROPEAN PATENT SPECIFICATION

(11) **EP 2 604 859 B1**
(45) Date of publication and mention of the grant of the patent: **12.10.2016**
(21) Application number: 10855867.7
(22) Date of filing: 09.08.2010
(51) Int. Cl.: F04B 53/10, F02M 59/02, F02M 59/46, F16K 15/06, F04B 1/04, F02M 63/02

(54) **HIGH PRESSURE PUMP**
HOCHDRUCKPUMPE
POMPE À HAUTE PRESSION

(43) Date of publication of application: 19.06.2013
(73) Proprietor: Bosch Corporation, Tokyo 150-8360 (JP)
(72) Inventor: TAKAHASHI Osamu, Higashimatsuyama-shi Saitama 355-8603 (JP)
(74) Representative: DREISS Patentanwälte PartG mbB
(86) International application number: PCT/JP2010/063457
(87) International publication number: WO 2012/020466

(56) References cited:
- WO-A1-2006/070719
- JP-A- 2006 183 579
- JP-A- 2006 183 579
- JP-U- S5 098 126
- JP-U- 50 098 126

## Description

### TECHNICAL FIELD

The present invention relates to a high-pressure pump (there are also cases where this is called a fuel supply pump or a supply pump) that pressurizes and pressure-feeds fuel.

### BACKGROUND ART

Conventionally, among high-pressure pumps that pressurize and pressure-feed fuel, there are high-pressure pumps that use, as a fuel inlet valve or a fuel outlet valve, a valve element equipped with a seat portion that has a seat surface seated on a seating surface of a peripheral edge of an opening of a valve element insertion hole, a stem portion that extends in an axial direction from the seat portion, and plural guide vane portions that have sliding contact surfaces in sliding contact with an inner peripheral surface of the valve element insertion hole and are placed at predetermined intervals apart from each other in a circumferential direction around the stem portion.
JP S50 98126 U, JP 2006 183579 A and WO 2006/070719 A1 disclose examples of pressure pumps.

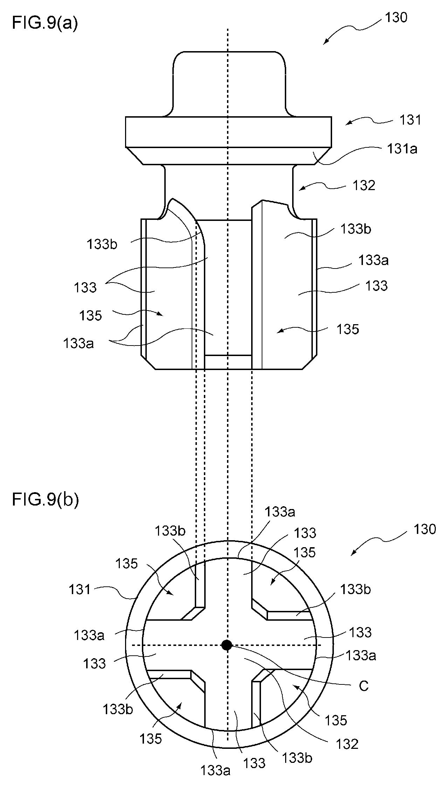

FIG. 9(a) shows a radial direction side view of such a valve element 130, and FIG. 9(b) shows an axial direction side view in which the valve element 130 of FIG. 9(a) is seen from a guide vane portion 133 side (the opposite side of a seat portion131). The valve element 130 is equipped with a seat portion 131 that has a seat surface 131a joined to a seating surface formed on an edge portion of an opening of a valve element insertion hole. A stem portion 132 is disposed extending in the axial direction from the seat portion 131, and plural guide vane portions 133 that have sliding contact surfaces 133a in sliding contact with an inner peripheral surface of the valve element insertion hole are placed at predetermined intervals apart from each other in a circumferential direction around the stem portion 132. Regions defined by every two guide vane portions 133 adjacent to each other in the circumferential direction and the inner peripheral surface of the valve element insertion hole are fuel flow paths 135.

Further, on one surface of both circumferential direction side surfaces of each of the guide vane portions 133, there are disposed projecting surfaces 133b that are formed projecting toward the fuel flow paths 135. The projecting surfaces 133b have the function of receiving the impact of the passing fuel when the fuel passes through the fuel flow paths 135 and converting the migration energy of the fuel into an axial rotational force on the valve element 130.

### CITATION LIST

### PATENT LITERATURE

Patent Document 1: JP-A-2006-183579 (FIG. 1 and FIG. 3, etc.)
Patent Document 2: JP-A-2006-183647 (FIG. 1, etc.)

### SUMMARY OF INVENTION

### TECHNICAL PROBLEM

Incidentally, there are high-pressure pumps in which the diameter of the valve element must be made smaller due to restrictions on the layout of the engine to which the high-pressure pump is mounted and restrictions on the pump size. When the diameter of the valve element becomes smaller, there is the problem that it becomes difficult to achieve a balance between ensuring the area of the sections of the fuel flow paths in the valve element at which the passage area becomes the smallest (this area will be called the "smallest passage area" below) and ensuring the amount of projection of the projecting surfaces.

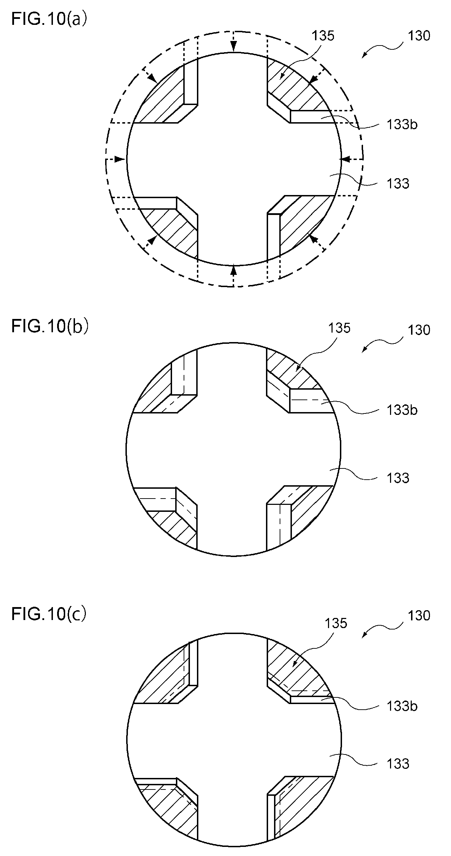

To describe this problem specifically, as shown in FIG. 9(b), in the aforementioned valve element 130, ordinarily the guide vane portions 133 are disposed in such a way as to extend radially taking a stem core C of the stem portion 132 as a base point. For that reason, when the diameter of the valve element 130 becomes smaller, as shown in FIG. 10(a), the smallest passage area (the area of the diagonal line regions in the drawing) of the formed fuel flow paths 135 tends to become smaller. Further, when the diameter of the valve element 130 becomes smaller, the axial direction projected area of the projecting surfaces 133b becomes smaller by the amount that the radial direction lengths of the guide vane portions 133 become shorter, and the amount of passing fuel that impacts on the projecting surfaces 133b tends to decrease.

At this time, if priority is given to ensuring the amount of passing fuel that impacts on the projecting surfaces 133b and the amount of projection of the projecting surfaces 133b is made larger, as shown in FIG. 10(b), the smallest passage area of the fuel flow paths 135 becomes smaller and the fuel feeding efficiency goes down.

On the other hand, if priority is given to ensuring the smallest passage area of the fuel flow paths 135, as shown in FIG. 10 (c), the amount of projection of the projecting surfaces 133b becomes insufficient and it becomes difficult to apply the axial rotational force to the valve element 130. If the axial rotational force is insufficient, sliding in the same phase of the valve element 130 is repeated, and inclination of the valve element 130 and uneven wear of the seat surface tend to arise due to seizure and wear of the sliding surfaces. As a result, a lowering of sealing performance and sticking of the valve element 130 tend to arise, and there is the concern that the reliability of the high-pressure pump will become lower.

This problem can arise even in a case where one wants to further increase the amount of fuel that is pressure-fed by the high-pressure pump. That is, if the smallest passage area of the fuel flow paths is increased in order to increase the flow rate of the fuel passing through the valve without greatly changing the size of the valve element, there is the problem that the amount of projection of the projecting surfaces ends up becoming smaller and it becomes difficult to obtain the axial rotational force on the valve element.

In light of this problem, the inventor of the present invention discovered that this problem can be solved by configuring the valve element in such a way that, when the valve element is seen in the axial direction from the guide vane portion side, centerlines of widths of end surfaces of the guide vane portions are positioned on the projecting surface sides of parallel lines that are parallel to the centerlines and pass through the stem core of the stem portion, wherein the guide vane portions have same width from their axial direction lower end portions at least to their axial direction central portions, the width of the guide vane portions becomes larger approaching the seat portion and thus completed the present invention. That is, it is an object of the present invention to provide a high-pressure pump that can achieve a balance between fuel feeding efficiency and reliability with respect to sealing performance and resistance to valve sticking.

### SOLUTION TO PROBLEM

According to the present invention, there is provided a high-pressure pump equipped with a valve element configured to include: a seat portion that has a seat surface seated on a seating surface of a peripheral edge of an opening of a valve element insertion hole; a stem portion that extends in an axial direction from the seat portion; and plural guide vane portions that have sliding contact surfaces in sliding contact with an inner peripheral surface of the valve element insertion hole and are placed at predetermined intervals apart from each other in a circumferential direction around the stem portion, wherein fuel flow paths are defined by the guide vane portions adjacent to each other in the circumferential direction and the inner peripheral surface of the valve element insertion hole, on one surface of both circumferential direction side surfaces of each of the guide vane portions, there are disposed projecting surfaces that are formed in such a way as to project toward the fuel flow paths and are for allowing fuel passing through the fuel flow paths to impact thereon to thereby convert the kinetic energy of the fuel into an axial rotational force on the valve element, and when the valve element is seen in the axial direction, centerlines (L1) of the width of sections of the guide vane portions at which the width is the narrowest are positioned on the projecting surface sides of parallel lines (L2) that are parallel to the centerlines (L1) and pass through a stem core of the stem portion, wherein the guide vane portions have same width from their axial direction lower end portions at least to their axial direction central portions, the width of the guide vane portions becomes larger approaching the seat portion and thus the aforementioned problem can be solved.

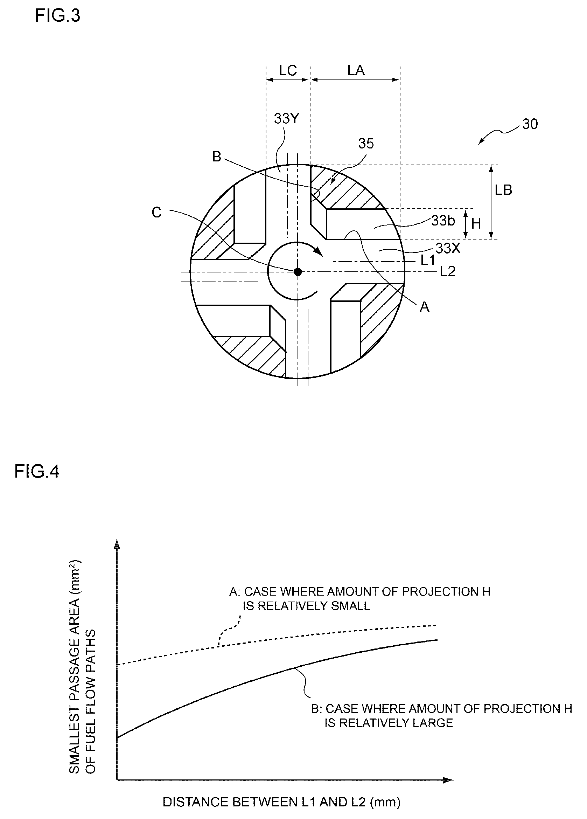

Here, in the present specification, the "width of the guide vane portions" is the width of the place indicated by symbol LC in FIG. 3 and means the width of the guide vane portions visually perceived when the valve element end portion is seen in the axial direction in the direction in which the fuel passes.

In a case where the guide vane portions are chamfered, the "width of the guide vane portions" means the width of the guide vane portions excluding the chamfered sections.

Further, another aspect of the present invention is a high-pressure pump equipped with a valve including a high-pressure pump valve element that is inserted into a valve element insertion hole disposed in a housing, wherein the high-pressure pump valve element has a seat portion that has a seat surface that is seated, by the energizing force of a resilient member, on a seating surface of a peripheral edge of an opening of the valve element insertion hole, a stem portion that extends in an axial direction via the seat portion, and plural guide vane portions that have sliding contact surfaces in sliding contact with an inner peripheral surface of the valve element insertion hole and are placed at predetermined intervals apart from each other in a circumferential direction of the stem portion, predetermined fuel flow paths are defined by the guide vane portions adjacent to each other in the circumferential direction and the inner peripheral surface of the valve element insertion hole, on one surface of both circumferential direction side surfaces of each of the guide vane portions, there are disposed projecting surfaces that are for allowing fuel passing through the fuel flow paths to impact thereon to thereby convert the kinetic energy of the fuel into an axial rotational force on the valve element, when the valve element end portion is seen in the axial direction along the direction in which the fuel passes, centerlines (L1) that are hypothetical straight lines passing through sections of the guide vane portions at which the width becomes the smallest are positioned on the projecting surface sides of parallel lines (L2) that are hypothetical straight lines that have a parallel relationship to the centerlines (L1) and pass through a stem core of the stem portion, and in a case where the plural guide vane portions have been divided into two along the parallel lines (L2), the guide vane portions have asymmetrical shapes.

Further, in configuring the high-pressure pump of the present invention, it is preferred that the guide vane portions be formed by cutting using an end mill, the amount of projection of the projecting surfaces be adjusted by adjusting the amount of entry of the end mill along the axial direction of the valve element, and the width be adjusted by adjusting the amount of entry of the end mill along a radial direction of the valve element.

Further, in configuring the high-pressure pump of the present invention, it is preferred that the high-pressure pump be a pump used in an accumulator fuel injection system.

### ADVANTAGEOUS EFFECTS OF INVENTION

According to the high-pressure pump of the present invention, by configuring the valve element in such a way that, when the valve body is seen in the axial direction, the centerlines (L1) of the width of the sections of the guide vane portions at which the width is the narrowest are positioned on the projecting surface sides of the parallel lines (L2) that are parallel to the centerlines (L1) and pass through the stem core of the stem portion, it becomes possible to achieve a balance between ensuring the smallest passage area of the fuel flow paths and ensuring the amount of projection of the projecting surfaces. Consequently, in a case where the diameter of the valve element is configured to be small, fuel feeding efficiency and reliability with respect to sealing performance and resistance to valve sticking can be improved even of course with the diameter of the valve element being maintained as is, and a lowering of the reliability of the high-pressure pump can be prevented.

### BRIEF DESCRIPTION OF DRAWINGS

[Fig. 1] FIG. 1 is a drawing for describing an example configuration of a high-pressure pump of an embodiment of the present invention;
[Fig. 2] FIGS. 2 (a) to 2 (c) are drawings for describing the configuration of a valve element;
[Fig. 3] FIG. 3 is a drawing for describing the amount of projection of projecting surfaces and the smallest passage area of fuel flow paths;
[Fig. 4] FIG. 4 is a drawing for describing the relationship between the distance between centerlines L1 and parallel lines L2 and the smallest passage area of the fuel flow paths;
[Fig. 5] FIGS. 5(a) and 5(b) are drawings for describing a method of forming guide vane portions by cutting using an end mill;
[Fig. 6] FIG. 6 is a drawing for describing the relationship between the amount of entry of the end mill along an axial direction of the valve element and the amount of projection of the projecting surfaces;
[Fig. 7] FIG. 7 is a drawing for describing the relationship between the amount of entry of the end mill along the axial direction of the valve element, the amount of entry of the end mill along a radial direction of the valve element, and the smallest passage area of the fuel flow paths;
[Fig. 8] FIG. 8 is a drawing for describing an example configuration of an accumulator fuel injection system; [Fig. 9] FIGS. 9(a) and 9(b) are drawings for describing the configuration of a conventional valve element; and [Fig. 10] FIGS. 10(a) to 10(c) are drawings for describing the relationship between the amount of projection of projecting surfaces and the smallest passage area of fuel flow paths in the conventional valve element.

### DESCRIPTION OF EMBODIMENTS

An embodiment of a high-pressure pump pertaining to the present invention will be specifically described below with reference to the drawings. However, the embodiment below is intended to show one aspect of the present invention, is not intended to limit the present invention, and can be arbitrarily changed in the scope of the present invention. Members or sections to which the same reference signs are given in the drawings represent the same members or sections, and description will be omitted where appropriate.

### 1. High-Pressure Pump

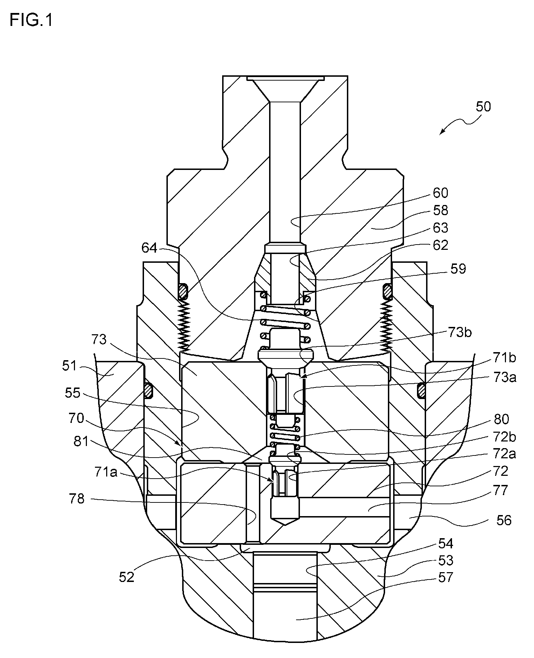

FIG. 1 is a partial cross-sectional view showing an example of a configuration of a high-pressure pump 50 and shows a partial cross-sectional view in which the area around a region where an IO valve (inlet/outlet valve) 70 is disposed is cut along the axis of a plunger 57. The high-pressure pump 50 is used as a fuel supply pump in an accumulator fuel injection system for injecting fuel into cylinders of an internal combustion engine, but the intended use of the high-pressure pump is not limited to this.

In the high-pressure pump 50, a plunger barrel 53 is inserted from above (the upper side of FIG. 1) and fixed to a cylinder of a pump housing 51. A plunger sliding hole 54 is disposed in the plunger barrel 53 along its axial direction (the up-and-down direction in FIG. 1), and a valve accommodating hole 55 is disposed in communication with the plunger sliding hole 54.

The plunger 57 is accommodated in the plunger sliding hole 54 in such a way that the plunger 57 may freely slide in the axial direction. Further, the IO valve 70 is fitted into the valve accommodating hole 55 and is pressed downward and fixed by a valve holder 58. A storage hole 59 that has an opening on the IO valve 70 side is formed inside the valve holder 58. Further, an outlet passageway 60 that opens at the end portion of the valve holder 58 on the opposite side of the IO valve 70 and leads to the storage hole 59 is disposed in the valve holder 58.

An outlet spring receiver 62 is fitted inside the storage hole 59. A communication hole 63 that has substantially the same diameter as that of the outlet passageway 60 and leads to the outlet passageway 60 is bored into the central section of the outlet spring receiver 62. Additionally, an outlet spring 64 is resiliently set between the outlet spring receiver 62 and an outlet valve 71b, and the outlet valve 71b is always energized toward a seating surface 73b of an outlet valve body 73.

The IO valve 70 is configured to have an inlet valve 71a, the outlet valve 71b, an inlet valve body 72, the outlet valve body 73, and an inlet spring 80.

The inlet valve body 72 and the outlet valve body 73 are in abutting contact with each other and are integrated. An inlet insertion hole 72a, into which the inlet valve 71a is inserted in such a way that the inlet valve 71a may freely slide, is formed in the inlet valve body 72 in the vicinity of the center thereof along the axial direction. On the lower side of the inlet insertion hole 72a, an inlet path 77 that is in communication with the inlet insertion hole 72a is formed as far as the side surface of the inlet valve body 72 in such a way as to be orthogonal to the inlet insertion hole 72a to open at the side surface. The inlet path 77 is in communication with a supply passageway 56 formed in the plunger barrel 53.

Further, a dual inlet/outlet passageway 78 is bored into the inlet valve body 72 in the neighborhood of the inlet insertion hole 72a and parallel to the inlet insertion hole 72a, and both ends of the dual inlet/outlet passageway 78 open to the axial direction upper and lower surfaces of the inlet valve body 72. One end of the dual inlet/outlet passageway 78 opens to a fuel collection chamber 81 defined between the inlet valve body 72 and the outlet valve body 73, and the other end side is in communication with a pressurizing chamber 52.

In the outlet valve body 73, a recessed portion whose cross-sectional shape in the axial direction of the inlet valve 71a and the outlet valve 71b is substantially trapezoidal is formed in the substantially central section of the surface of the outlet valve body 73 in abutting contact with the inlet valve body 72, whereby the fuel collection chamber 81 is defined. The inlet valve 71a is positioned in the substantial center of the fuel collection chamber 81, and the one end of the dual inlet/outlet passageway 78 opens to the fuel collection chamber 81.

Moreover, an outlet insertion hole 73a is bored into the outlet valve body 73 in such a way as to lead to the fuel collection chamber 81, and the outlet valve 71b is inserted into the outlet insertion hole 73a in such a way that the outlet valve 71b may freely slide. Further, the inlet spring 80 is accommodated in the outlet insertion hole 73a. The inlet spring 80 is resiliently set between the inlet valve 71a and the outlet valve 71b, and the inlet valve 71a is always energized toward a seating surface 72b of the inlet valve body 72.

In the high-pressure pump 50, when the plunger 57 has been brought down, the inlet valve 71a opens, the outlet valve 71b closes, and fuel is introduced into the pressurizing chamber 52 via the inlet valve 71a. Further, when the plunger 57 is pushed up and the pressure of the fuel inside the pressurizing chamber 52 rises, the inlet valve 71a closes, the outlet valve 71b opens, and high-pressure fuel is discharged via the outlet valve 71b.

### 2. Valve Element

### (1) Basic Configuration

Next, the configuration of the inlet valve 71a and the outlet valve 71b disposed in the high-pressure pump 50 of the present embodiment will be described in detail. In the high-pressure pump 50 of the present embodiment, the inlet valve 71a and the outlet valve 71b basically have the same shape except that the axial direction length of the outlet valve 71b is slightly longer than that of the inlet valve 71a.

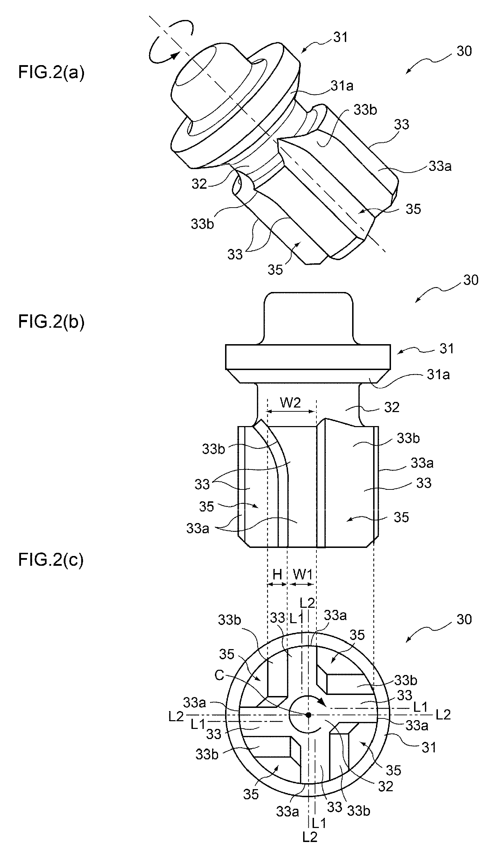

FIG. 2(a) shows a perspective view of a valve element 30 used as the inlet valve 71a and the outlet valve 71b, FIG. 2(b) shows a radial direction side view of the valve element 30, and FIG. 2 (c) shows an axial direction side view in which the valve element 30 is seen from a guide vane portion 33 side.

The valve element 30 is equipped with a seat portion 31 that has a seat surface 31a seated on a seating surface of a peripheral edge of an opening of a valve insertion hole in a valve body, a stem portion 32 that extends in an axial direction from the seat portion 31, and plural guide vane portions 33 that have sliding contact surfaces 33a in sliding contact with an inner peripheral surface of the valve insertion hole and are placed at predetermined intervals apart from each other in a circumferential direction around the stem portion 32. The guide vane portions 33 are disposed in four places at equal intervals in the circumferential direction. The spaces between the guide vane portions 33 adjacent to each other are fuel flow paths 35, and fuel passes through the fuel flow paths 35 when the valve is open. Further, the axial direction end portions of the guide vane portions 33 on the seat portion 31 side are disposed in such a way as to be spaced apart from the seat portion 31, so that a space is formed between the guide vane portions 33 and the seat portion 31.

### (2) Projecting Surfaces and Amount of Projection

A projecting surface 33b is disposed on one surface of both circumferential direction side surfaces of each of the guide vane portions 33. The projecting surfaces 33b are formed with a curved shape in such a way as to project toward the spaces between the adjacent guide vane portions 33 so that the width of the guide vane portions 33 becomes larger from the vicinities of the axial direction centers of the guide vane portions 33 approaching the seat portion 31. The projecting surfaces 33b are disposed in order to receive the impact of the fuel flowing through the fuel flow paths 35 when the valve is open and utilize the migration energy of the fuel to cause the valve element 30 to axially rotate. The valve element 30 axially rotates in the direction of the arrow in FIGS. 2(a) and 2(c).

Differences arise in the amount of fuel that impacts depending on the amount of projection of the projecting surfaces 33b, so the amount of projection of the projecting surfaces 33b becomes a factor that affects the axial rotational force on the valve element 30. In a case where the radial direction lengths of the guide vane portions 33 are the same and the flow rates and pressures of the fuel passing through the fuel flow paths 35 are the same, the larger the amount of projection of the projecting surfaces 33b is, the easier it is to obtain a larger axial rotational force.

The amount of projection of the projecting surfaces is the size of the place indicated by symbol H in FIGS. 2(b) and 2(c).

That is, the amount of projection of the projecting surfaces means the difference (W2 - W1) between the width of the guide vane portions in the sections-of the sliding contact surfaces of the guide vane portions with respect to the inner peripheral surface of the valve element insertion hole-at which the width of the guide vane portions is the narrowest (W1 in FIGS. 2(b) and 2(c)) and the width of the guide vane portions in the sections at which the width of the guide vane portions is the widest (W2 in FIGS. 2(b) and 2(c)) when the valve element is seen in the radial direction.

The amount of projection H of the guide vane portions can be decided in consideration of the size, intended use, and performance, for example, of the high-pressure pump valve element.

The shape of the projecting surfaces 33b does not have to be a curved shape, but it is preferred that the projecting surfaces 33b be formed in such a way that the width of the guide vane portions 33 gradually becomes wider approaching the seat portion 31 so that the projecting surfaces 33b do not significantly obstruct the flow of the fuel passing through the valve element 30. In the case of the inlet valve 71a and the outlet valve 71b of the high-pressure pump 50 of the present embodiment, the guide vane portions 33 are formed by cutting using an end mill as described later, so the projecting surfaces 33b have circular arc shapes in correspondence to the outer peripheral surface of the drill of the end mill.

### (3) Relationship between Centerlines L1 and Parallel Lines L2

Further, as shown in FIG. 2(c), the guide vane portions 33 are disposed in such a way that centerlines L1 of the width of sections of the guide vane portions 33 at which the width is the narrowest (there are cases where these centerlines will simply be called "centerlines" below) are positioned on the projecting surface 33b sides of parallel lines L2 that are parallel to the centerlines L1 and pass through a stem core C of the stem portion 32 (there are cases where these parallel lines will simply be called "parallel lines" below). The width of the regions of the guide vane portions 33 of FIG. 2 (b) from their axial direction lower end portions to their axial direction central portions at which the projecting surfaces 33b start to project is the same, and the centerlines of the width of the guide vane portions 33 in these regions correspond to the centerlines L1 of FIG. 2(c).

Positioning the centerlines L1 on the projecting surface 33b sides of the parallel lines L2 means disposing the base points of the guide vane portions 33 rising from the stem portion 32 in such a way that the base points are decentered from the stem core C, and by decentering the base points of all the guide vane portions 33 from the stem core C, the radial direction length of the side surfaces on which the projecting surfaces 33b are formed can be made longer.

As a result, as shown in FIG. 3, in each of the fuel flow paths 35, among side surfaces of two guide vane portions 33X and 33Y that are adjacent to each other and configure a fuel flow path 35, even if a radial direction length LB of a side surface B of the guide vane portion 33Y on which the projecting surface 33b is not formed becomes shorter by the amount by which the amount of projection H of the projecting surface 33b has increased, it becomes easy to ensure the smallest passage area of the fuel flow path 35 by the amount by which a radial direction length LA of a side surface A of the guide vane portion 33X on which the projecting surface 33b is formed becomes longer. By comparing FIG. 3 and FIGS. 10 (a) to 10 (c), it can be easily understood that in the valve element 30 of the present embodiment, the amount of projection H of the projecting surfaces 33b is made large without the smallest passage area of the fuel flow paths 35 being made significantly small.

### (4) Asymmetrical Shapes

Further, as shown in FIGS. 2 (a) to 2 (c) and FIG. 3, the guide vane portions 33 are configured in such a way that the centerlines L1 are disposed positioned on the projecting surface 33b sides of the parallel lines L2 and in such a way that divided parts with asymmetrical shapes are obtained in a case where the plural guide vane portions 33 have been divided into two along the parallel lines L2.

That is, the plural guide vane portions 33 are decentered (offset) a predetermined amount about the stem core C, the base points of the plural guide vane portions are decentered a predetermined amount from the stem core C, and the plural guide vane portions extend radially outward.

Additionally, in the high-pressure pump valve element 30, that the centerlines L1 are positioned on the projecting surface 33b sides of the parallel lines L2 and that the plural guide vane portions 33 are configured to have asymmetrical shapes in a case where the plural guide vane portions 33 have been divided into two along the parallel lines L2 means that the base points of the guide vane portions 33 rising from the stem portion 32 are disposed decentered a predetermined amount from the stem core C.

Consequently, divided parts with asymmetrical shapes are obtained in a case where the plural guide vane portions 33 have been divided into two along the parallel lines L2. Additionally, in a case where the plural guide vane portions 33 are configured from four guide vane portions, for example, the plural guide vane portions 33 become a cross with an asymmetrical shape when seen in the axial direction.

Thus, even in a case where the base points of all the guide vane portions 33 are decentered a predetermined amount from the stem core C and the amount of projection of the projecting surfaces is relatively large, there arise spaces in which to make the radial direction lengths LA of the side surfaces on which the projecting surfaces are formed longer. As a result, the radial direction lengths LA of the side surfaces on which the projecting surfaces 33b are formed can be made longer in correspondence to the amount of decentering.

### (5) Smallest Passage Area

The smallest passage area of the fuel flow paths 35 is a factor that affects the extent of the narrowing of the flow paths of the fuel passing through the valve element 30, and differences arise in the fuel feeding efficiency of the high-pressure pump 50 depending on differences in the smallest passage area. In a case where the flow rates and pressures of the fuel supplied to the fuel flow paths 35 are the same, the larger the smallest passage area is, the more difficult it is for the fuel feeding efficiency to become lower. That is, in the valve element 30 used as the inlet valve 71a and the outlet valve 71b of the present embodiment, a balance between the amount of projection H and the smallest passage area is achieved, whereby an axial rotational force on the valve element 30 is reliably obtained without lowering the fuel feeding efficiency. For that reason, a balance between the fuel feeding efficiency in the high-pressure pump 50 and reliability with respect to sealing performance and resistance to valve sticking of the valve element 30 can be achieved.

The size of the smallest passage area can be decided in consideration of the size, intended use, and performance, for example, of the high-pressure pump valve element.

### (6) Relationship between Distance between Centerlines L1 and Parallel Lines L2 and Smallest Passage Area of Fuel Flow Paths

Next, the relationship between the distance between the centerlines L1 and the parallel lines L2 that passes through the stem core C of the stem portion 32 and is parallel to the centerlines L1, that is, the so-called amount of de-centering and the smallest passage area of the fuel flow paths will be generally described with reference to FIG. 4.

That is, the distance (mm) between the centerlines L1 and the parallel line L2 is taken on the horizontal axis of FIG. 4, and the smallest passage area (mm²) of the fuel flow paths is taken on the vertical axis of FIG. 4.

Additionally, line A is a case where the amount of projection H is relatively small, and in this case, the smallest passage area of the fuel flow paths changes very little even when the distance between the centerlines L1 and the parallel lines L2 (amount of decentering) changes somewhat.

On the other hand, line B is a case where the amount of projection H is relatively large, and in this case, when the distance between the centerlines L1 and the parallel lines L2 (amount of decentering) changes, the smallest passage area of the fuel flow paths changes greatly, so the larger the distance between the centerlines L1 and the parallel lines L2 is, the larger the smallest passage area becomes.

Thus, it will be understood that, in the present embodiment, by adjusting the distance between the centerlines L1 and the parallel lines L2-that is, the amount of decentering of the plural guide vane portions-a predetermined fuel passage area can be maintained even in a case where the amount of projection of the projecting surfaces is relatively large.

### 3. Example of Method of Manufacturing Valve Element

The method of forming the guide vane portions 33 of the valve element 30 is not particularly limited; for example, the guide vane portions 33 can be formed by cutting using an end mill. A method of forming the guide vane portions 33 by cutting using an end mill will be specifically described below as an example of a method of forming the guide vane portions 33.

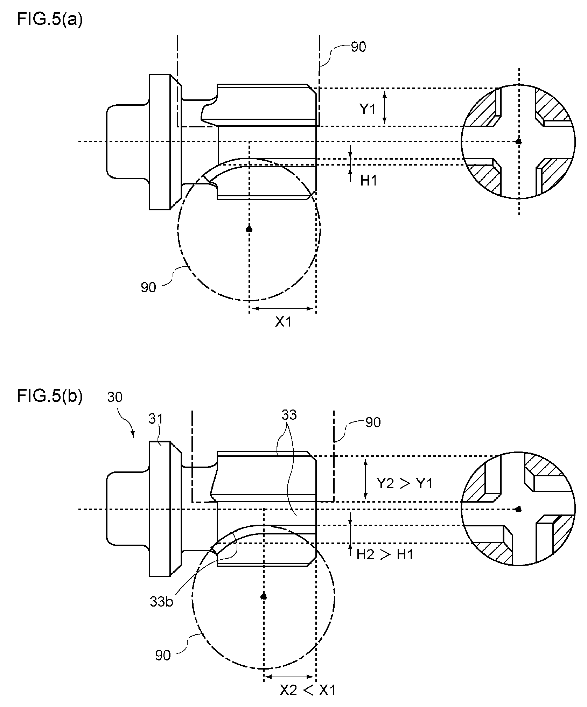

FIGS. 5 (a) and 5 (b) show entry positions of an end mill 90 when forming the guide vane portions 33 by forming grooves with the end mill 90 in the outer peripheral surface of an intermediate body in the middle of manufacturing the valve element 30. FIG. 5 (a) shows the entry position of the end mill 90 when manufacturing a conventional valve element, and FIG. 5 (b) shows the entry position of the end mill 90 when manufacturing the valve element 30 of the present embodiment. In FIGS. 5(a) and 5(b), the entry position of the end mill 90 along the axial direction of the valve element is shown in the lower halves, and the entry position of the end mill 90 along the radial direction of the valve element is shown in the upper halves.

When manufacturing the valve element 30 of the present embodiment, an amount of entry X2 of the end mill 90 along the axial direction of the valve element 30 is made smaller than an amount of entry X1 of the end mill 90 when manufacturing the conventional valve element. Because of this, the axial direction lengths of the regions in which the projecting surfaces 33b are formed become longer, and an amount of projection H2 of the projecting surfaces 33b formed in correspondence to the circular arc of the outer peripheral surface of the end mill 90 is made larger than an amount of projection H1 of the conventional projecting surfaces.

Further, when manufacturing the valve element 30 of the present embodiment, an amount of entry Y2 of the end mill 90 along the radial direction of the valve element 30 is made larger than an amount of entry Y1 of the end mill 90 when manufacturing the conventional valve element. Because of this, the lengths (=Y2) of the side surfaces of the guide vane portions 33 on which the projecting surfaces 33b are formed are made longer than the lengths (=Y1) of the side surfaces of the conventional guide vane portions.

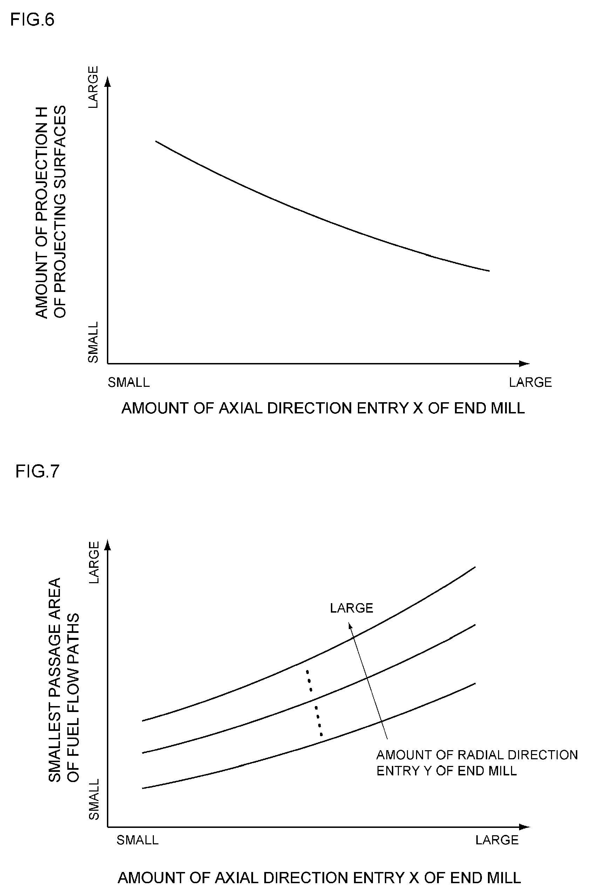

Here, FIG. 6 and FIG. 7 show the relationship between the amount of entry X of the end mill 90 along the axial direction of the valve element 30 and the amount of projection H of the projecting surfaces 33b that are formed and the relationship between the amount of entry X of the end mill 90 along the axial direction of the valve element 30, the amount of entry Y of the end mill 90 along the radial direction of the valve element 30, and the smallest passage area of the fuel flow paths 35 that are formed.

As shown in FIG. 6, because the cross-sectional shape of the end mill 90 is a substantially perfect circle, the smaller the amount of entry X of the end mill 90 along the axial direction of the valve element 30 is, the larger the amount of projection H of the projecting surfaces 33b becomes. Further, as shown in FIG. 7, in a case where the amount of entry Y of the end mill 90 along the radial direction of the valve element 30 is the same, the larger the amount of entry X of the end mill 90 along the axial direction of the valve element 30 is, the larger the smallest passage area becomes, and in a case where the amount of entry X of the end mill 90 along the axial direction of the valve element 30 is the same, the larger the amount of entry Y of the end mill 90 along the radial direction of the valve element 30 is, the larger the smallest passage area becomes.

On the basis of these relationships shown in FIG. 6 and FIG. 7, the amount of entry of the end mill 90 along the axial direction or the radial direction of the valve element 30 is appropriately set in such a way that the amount of projection H of the projecting surfaces 33b that are formed and the smallest passage area of the fuel flow paths 35 both fall in desired ranges. In this way, by just changing the amount of entry of the end mill 90, the valve element 30 equipped with the guide vane portions 33 having a particular shape can be easily obtained.

### 4. Accumulator Fuel Injection System

Next, an accumulator fuel injection system equipped with the high-pressure pump 50 of the present embodiment will be briefly described.

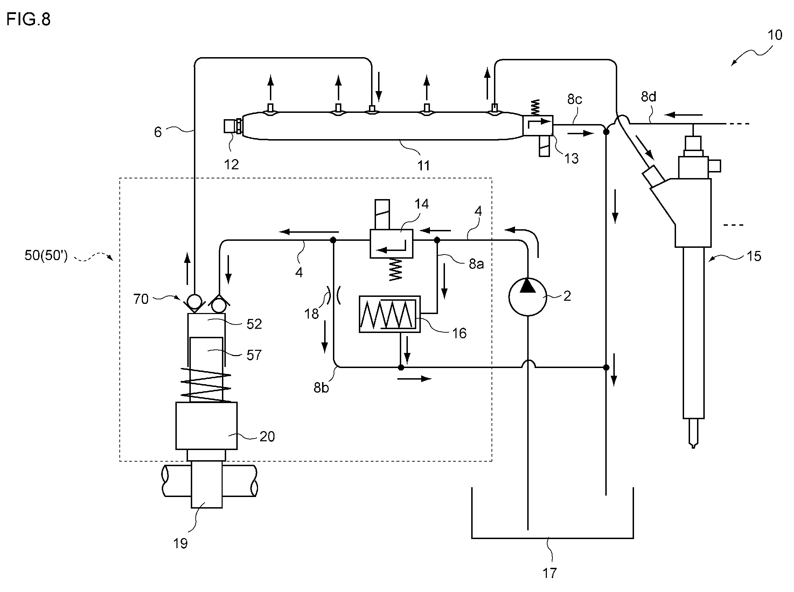

FIG. 8 shows an example of the configuration of an accumulator fuel injection system 10. The accumulator fuel injection system 10 is equipped with a fuel tank 17, a low-pressure feed pump 2, the high-pressure pump 50, a common rail 11, plural injectors 15, and so forth as main configural elements.

The low-pressure feed pump 2 is configured as a mechanical or electromagnetic pump, sucks up fuel inside the fuel tank 17, and supplies the fuel toward the high-pressure pump 50. When the fuel is supplied by the low-pressure feed pump 2 to the high-pressure pump 50, the high-pressure pump 50 pressurizes the supplied fuel and pressure-feeds the fuel to the common rail 11. Fuel that has been excessively supplied is return to the fuel tank 17 via first and second return passageways 8a and 8b.

The high-pressure pump 50 is equipped with the plunger 57 that is moved up and down by the driving force of an engine via a cam 19 and a tappet 20. The fuel flows via the IO valve 70 into the pressurizing chamber 52 whose capacity is varied by the up-and-down movement of the plunger 57, and the pressurized fuel is pressure-fed to the common rail 11 via the IO valve 70.

A supply passageway 4 equipped with a proportional control valve 14 for controlling the flow rate of the fuel supplied from the low-pressure feed pump 2 is formed in the high-pressure pump 50, and the supply of the fuel to the pressurizing chamber 52 is performed in communication with the IO valve 70. Control of the rail pressure becomes possible as a result of the proportional control valve 14 adjusting the flow rate of the fuel supplied to the pressurizing chamber 52.

Further, the first and second return passageways 8a and 8b disposed in the high-pressure pump 50 are both in communication with the fuel tank 17. The other end of the first return passageway 8a is connected to the supply passageway 4 on the upstream side of the proportional control valve 14, and an overflow valve 16 is disposed in the middle of the first return passageway 8a. The other end of the second return passageway 8b is connected to the supply passageway 4 between the proportional control valve 14 and the IO valve 70, and an orifice 18 is disposed in the middle of the second return passageway 8b.

Further, the common rail 11, which is connected via a high-pressure supply passageway 6 to the high-pressure pump 50, accumulates the high-pressure fuel pressure-fed by the high-pressure pump 50 and supplies the fuel with equal pressure to the plural injectors 15. Control of the opening and closing of the injectors 15 connected to the common rail 11 is performed by energization control, and the injectors 15 inject the fuel pressure-fed from the common rail 11 into cylinders of the engine. A fourth return passageway 8d for returning leak fuel discharged in accompaniment with the control of the opening and closing of the injectors 15 to the fuel tank 17 is connected to the injectors 15. The other end of the fourth return passageway 8d is in communication with the fuel tank 17.

Further, a rail pressure sensor 12 is disposed on the common rail 11. The sensor value of the rail pressure sensor 12 is used for rail pressure control. Further, a third return passageway 8c equipped with a proportional control valve 13 for adjusting the flow rate of the fuel discharged from the common rail 11 is connected to the common rail 11. The other end of the third return passageway 8c is in communication with the fuel tank 17. Control of the rail pressure becomes possible as a result of the proportional control valve 13 adjusting the flow rate of the fuel discharged from the common rail 11.

The high-pressure pump 50 of the accumulator fuel injection system 10 configured in this way is equipped with the valve element 30 of the present embodiment as the inlet valve 71a and the outlet valve 71b. The high-pressure pump 50 of the accumulator fuel injection system 10 is required to pressure-feed fuel of a relatively large flow rate, but even in cases where an even higher fuel flow rate is required in accompaniment with increasing the injection pressure and cases where the diameter of the valve element 30 becomes smaller due to restrictions on the engine layout or restrictions on the pump size, like a high-pressure pump that is attached to an engine block in such a way as to be placed on a cam disposed in an engine and used, reliability with respect to the sealing performance and resistance to valve sticking of the valve element 30 can be obtained while ensuring fuel feeding efficiency.

### REFERENCE SIGNS LIST

2: low-pressure feed pump, 4: supply passageway, 6: high-pressure supply passageway, 8a: first return passageway, 8b: second return passageway, 8c: third return passageway, 8d: fourth return passageway, 10: accumulator fuel injection system, 11: common rail, 12: rail pressure sensor, 13: proportional control valve, 14: proportional control valve, 15: injector, 16: overflow valve, 17: fuel tank, 18: orifice, 19: cam, 20: tappet, 30: valve element, 31: seat portion, 31a: seat surface, 32: stem portion, 33: guide vane portion, 33a: sliding contact surface, 33b: projecting surface, 35: fuel passageway, 50: high-pressure pump, 51: pump housing, 52: pressurizing chamber, 53: plunger barrel, 54: plunger sliding hole, 55: valve accommodating hole, 56: supply passageway, 57: plunger, 58: valve holder, 59: storage hole, 60: outlet passageway, 62: outlet spring receiver, 63: communication hole, 64: outlet spring, 70: IO valve, 71a: inlet valve, 71b: outlet valve, 72: inlet valve body, 72a: inlet insertion hole, 72b: seating surface, 73: outlet valve body, 73a: outlet insertion hole, 73b: seating surface, 77: inlet path, 78: dual inlet/outlet passageway, 80: inlet spring, 81: fuel collection chamber, 90: end mill

## Claims

1. A high-pressure pump (50) equipped with a valve element (30) configured to include: a seat portion (31) that has a seat surface (31a) seated on a seating surface of a peripheral edge of an opening of a valve element insertion hole; a stem portion (32) that extends in an axial direction from the seat portion (31); and a plurality of guide vane portions (33) that have sliding contact surfaces (33a) in sliding contact with an inner peripheral surface of the valve element insertion hole and are placed at predetermined intervals apart from each other in a circumferential direction around the stem portion (32),
wherein fuel flow paths are defined by the guide vane portions (33) adjacent to each other in the circumferential direction and the inner peripheral surface of the valve element insertion hole,
on one surface of both circumferential direction side surfaces of each of the guide vane portions (33), there are disposed projecting surfaces (33b) that are formed in such a way as to project toward the fuel flow paths and are for allowing fuel passing through the fuel flow paths to impact thereon to thereby convert the kinetic energy of the fuel into an axial rotational force on the valve element (30), and
when the valve element (30) is seen in the axial direction, centerlines (L1) of the width of sections of the guide vane portions (33) at which the width is the narrowest are positioned on the projecting surface (33b) sides of parallel lines (L2) that are parallel to the centerlines (L1) and pass through a stem core of the stem portion,
**characterized in that** the guide vane portions (33) have same width from their axial direction lower end portions at least to their axial direction central portions, the width of the guide vane portions (33) becomes larger approaching the seat portion (31).

2. A high-pressure pump (50) equipped with a valve including a high-pressure pump valve element (30) that is inserted into a valve element insertion hole disposed in a housing,
wherein the high-pressure pump valve element (30) has
a seat portion (31) that has a seat surface seated, by the energizing force of a resilient member, on a seating surface of a peripheral edge of an opening of the valve element insertion hole,
a stem portion (32) that extends in an axial direction via the seat portion (31), and
a plurality of guide vane portions (33) that have sliding contact surfaces (33a) in sliding contact with an inner peripheral surface of the valve element insertion hole and are placed at predetermined intervals apart from each other in a circumferential direction of the stem portion,
predetermined fuel flow paths are defined by the guide vane portions (33) adjacent to each other in the circumferential direction and the inner peripheral surface of the valve element insertion hole,
on one surface of both circumferential direction side surfaces of each of the guide vane portions (33), there are disposed projecting surfaces that are for allowing fuel passing through the fuel flow paths to impact thereon to thereby convert the kinetic energy of the fuel into an axial rotational force on the valve element (30),
when the valve element end portion is seen in the axial direction along the direction in which the fuel passes, centerlines (L1) that are hypothetical straight lines passing through sections of the guide vane portions (33) at which the width becomes the smallest are positioned on the projecting surface sides of parallel lines (L2) that are hypothetical straight lines that have a parallel relationship to the centerlines (L1) and pass through a stem core of the stem portion (32), and
in a case where the plurality of guide vane portions (33) have been divided into two along the parallel lines (L2), the guide vane portions (33) have asymmetrical shapes, **characterized in that** the guide vane portions (33) have same width from their axial direction lower end portions at least to their axial direction central portions, the width of the guide vane portions (33) becomes larger approaching the seat portion (31).

3. The high-pressure pump (50) according to claim 1 or 2, wherein
the guide vane portions (33) are formed by cutting using an end mill (90),
the amount of projection of the projecting surfaces (33b) is adjusted by adjusting the amount of entry of the end mill (90) along the axial direction of the valve element (30), and
the width is adjusted by adjusting the amount of entry of the end mill (90) along a radial direction of the valve element (30).

4. The high-pressure pump (50) according to any one of claims 1 to 3, wherein the high-pressure pump (50) is a pump used in an accumulator fuel injection system (10).

## Patentansprüche

1. Hochdruckpumpe (50), die mit einem Ventilelement (30) ausgerüstet ist, das konfiguriert ist, Folgendes zu enthalten: einen Sitzabschnitt (31), der eine Sitzoberfläche (31a) besitzt, die auf einer Sitzfläche einer Umfangskante einer Öffnung eines Ventilelement-Einsetzlochs sitzt; einen Schaftabschnitt (32), der sich in axialer Richtung von dem Sitzabschnitt (31) erstreckt; und mehrere Leitschaufelabschnitte (33), die Gleitkontaktoberflächen (33a) in Gleitkontakt mit einer inneren Umfangsoberfläche des Ventilelement-Einsetzlochs besitzen und in vorgegebenen Abständen voneinander in einer Umfangsrichtung um den Schaftabschnitt (32) angeordnet sind,
wobei Kraftstoffströmungswege durch die Leitschaufelabschnitte (33), die in der Umfangsrichtung einander benachbart sind, und durch die innere Umfangsoberfläche des Ventilelement-Einsetzlochs definiert sind,
auf einer Oberfläche beider Oberflächen auf Umfangsrichtungsseite jedes der Leitschaufelabschnitte (33) vorstehende Oberflächen (33b) angeordnet sind, die in der Weise ausgebildet sind, dass sie zu den Kraftstoffströmungswegen vorstehen und dazu dienen, Kraftstoff zu erlauben, sich durch die Kraftstoffströmungswege zu bewegen, um darauf aufzutreffen, um dadurch die kinetische Energie des Kraftstoffs in eine axiale Drehkraft auf das Ventilelement (30) umzuwandeln, und
dann, wenn das Ventilelement (30) in axialer Richtung betrachtet wird, Mittellinien (L1) der Breite von Zonen der Leitschaufelabschnitte (33), bei denen die Breite am geringsten ist, auf den Seiten der vorstehenden Oberfläche (33b) paralleler Linien (L2), die zu den Mittellinien (L1) parallel sind und durch den Schaftkern des Schaftabschnitts verlaufen, positioniert sind,
**dadurch gekennzeichnet, dass** die Leitschaufelabschnitte (33) von ihren in axialer Richtung unteren Endabschnitten wenigstens zu ihren in axialer Richtung mittleren Abschnitten die gleiche Breite besitzen, wobei die Breite der Leitschaufelabschnitte (33) bei Annäherung an den Sitzabschnitt (31) zunimmt.

2. Hochdruckpumpe (50), die mit einem Ventil ausgerüstet ist, das ein Hochdruckpumpen-Ventilelement (30) enthält, das in ein in einem Gehäuse angeordnetes Ventilelement-Einsetzloch eingesetzt ist,
wobei das Hochdruckpumpen-Ventilelement (30) Folgendes umfasst:
einen Sitzabschnitt (31), der eine Sitzoberfläche besitzt, die durch die Vorbelastungskraft eines elastischen Elements auf einer Sitzoberfläche einer Umfangskante einer Öffnung des Ventilelement-Einsetzlochs sitzt,
einen Schaftabschnitt (32), der sich in axialer Richtung durch den Sitzabschnitt (31) erstreckt und
mehrere Leitschaufelabschnitte (33), die Gleitkontaktoberflächen (33a) besitzen, die mit einer inneren Umfangsoberfläche des Ventilelement-Einsetzlochs in Gleitkontakt sind und in Umfangsrichtung des Schaftabschnitts in vorgegebenen Abständen voneinander angeordnet sind,
vorgegebene Kraftstoffströmungswege durch die Leitschaufelabschnitte (33), die in der Umfangsrichtung einander benachbart sind, und durch die innere Umfangsoberfläche des Ventilelement-Einsetzlochs definiert sind,
auf einer Oberfläche beider Oberflächen auf Umfangsrichtungsseite jedes der Leitschaufelabschnitte (33) vorstehende Oberflächen angeordnet sind, die dazu dienen, Kraftstoff zu erlauben, sich durch die Kraftstoffströmungswege zu bewegen, um darauf aufzutreffen, um dadurch die kinetische Energie des Kraftstoffs in eine axiale Drehkraft auf das Ventilelement (30) umzuwandeln,
wobei dann, wenn der Ventilelement-Endabschnitt in axialer Richtung in der Richtung, in der sich der Kraftstoff bewegt, betrachtet wird, Mittellinien (L1), die hypothetische gerade Linien sind, die durch Zonen der Leitschaufelabschnitte (33) verlaufen, an denen die Breite am geringsten ist, auf den Seiten der vorstehenden Oberfläche paralleler Linien (L2), die hypothetische gerade Linien sind, die zu den Mittellinien (L1) eine parallele Beziehung haben und durch einen Schaftkern des Schaftabschnitts (32) verlaufen, positioniert sind, und dann, wenn die mehreren Leitschaufelabschnitte (33) in zwei Abschnitte längs der parallelen Linien (L2) unterteilt worden sind, die Leitschaufelabschnitte (33) asymmetrische Formen haben,
**dadurch gekennzeichnet, dass** die Leitschaufelabschnitte (33) von ihren in axialer Richtung unteren Endabschnitten wenigstens zu ihren in axialer Richtung mittigen Abschnitten die gleiche Breite besitzen, wobei die Breite der Leitschaufelabschnitte (33) bei Annäherung an den Sitzabschnitt (31) zunimmt.

3. Hochdruckpumpe (50) nach Anspruch 1 oder 2, wobei
die Leitschaufelabschnitte (33) durch Schneiden unter Verwendung eines Stirnfräsers (90) gebildet sind,
der Vorsprungsbetrag der vorstehenden Oberflächen (33b) durch Einstellen des Eindringbetrags des Stirnfräsers (90) in axialer Richtung des Ventilelements (30) eingestellt wird und
die Breite durch Einstellen des Eindringbetrags des Stirnfräsers (90) in radialer Richtung des Ventilelements (30) eingestellt wird.

4. Hochdruckpumpe (50) nach einem der Ansprüche 1 bis 3,
wobei die Hochdruckpumpe (50) eine Pumpe ist, die in einem Druckspeicher-Kraftstoffeinspritzsystem (10) verwendet wird.

## Revendications

1. Pompe haute-pression (50) équipée d'un élément de soupape (30) comportant :
une partie formant siège (31) qui a une surface de siège (31a) venant contre une surface de siège du bord périphérique d'une ouverture d'un orifice d'insertion de l'élément de soupape,
une partie de tige (32) orientée dans la direction axiale à partir de la partie de siège (31) et,
un ensemble d'ailettes de guidage (33) ayant des surfaces de contact glissant (33a) venant en contact glissant avec la surface périphérique intérieure de l'orifice d'insertion de l'élément de soupape et qui sont situés à des intervalles prédéterminés les unes des autres dans la direction périphérique autour de la partie de tige (32),
des chemins de passage de carburant étant définis par les parties des ailettes de guidage (33) adjacentes les unes aux autres dans la direction périphérique et la surface périphérique intérieure de l'orifice d'insertion de l'élément de soupape,
sur une surface des deux surfaces latérales dans la direction périphérique de chaque partie des ailettes de guidage (33), il y a des surfaces en saillie (33b) formées de façon à venir en saillie vers les chemins de passage de carburant et qui permettent le passage de carburant par les chemins de passage de carburant pour s'impacter et transformer l'énergie cinétique du carburant en une force de rotation axiale agissant sur l'élément de soupape (30), et
si l'élément de soupape (30) est vu dans la direction axiale, les lignes centrales (L1) de la largeur des sections des parties des ailettes de guidage (33) là où la largeur est la plus étroite sont situées sur la surface de projection (33b) des lignes parallèles (L2) qui sont parallèles à la ligne centrale (L1) et traversent le noyau de la partie de tige,
pompe haute-pression **caractérisée en ce que**
les parties des ailettes de guidage (33) ont la même largeur à partir des parties d'extrémité inférieure de la direction axiale vers au moins les parties centrales de la direction axiale, la largeur des parties des ailettes de guidage (33) augmentant en s'approchant de la partie formant siège (31).

2. Pompe haute pression (50) équipée d'une soupape comportant un élément de soupape de pompe haute-pression (30) qui est inséré dans un orifice d'insertion d'élément de soupape prévu dans un boîtier,
l'élément de soupape de pompe haute-pression (30) ayant
une partie de siège (31) qui a une surface de siège positionnée par la force d'énergie d'un élément élastique sur une surface de siège d'un bord périphérique d'une ouverture d'un orifice d'insertion de l'élément de soupape,
une partie de tige (32) s'étendant dans la direction axiale par la partie de siège (31), et
un ensemble de parties des ailettes de guidage (33) qui ont des surfaces de contact de glissement (33a) venant en contact de glissement avec la surface périphérique intérieure de l'orifice d'insertion de l'élément de soupape et qui sont placées à des intervalles prédéterminés, écartées les unes des autres dans la direction périphérique de la partie de tige,
des chemins de passage de carburant, prédéterminés sont définis par les parties des ailettes de guidage (33) adjacentes l'une à l'autre dans la direction périphérique et la surface périphérique intérieure de l'orifice d'insertion de l'élément de soupape,
sur l'une des deux surfaces de guidage dans la direction périphérique de chaque partie des ailettes de guidage (33), il y a des surfaces venant en saillie permettant le passage du carburant par les chemins d'écoulement de carburant pour impacter et transformer ainsi l'énergie cinétique du carburant en une force de rotation axiale s'exerçant sur l'élément de soupape (30),
et la partie d'extrémité de l'élément de soupape vue dans la direction axiale suivant la direction de passage du carburant, les lignes centrales (L1) qui sont des lignes droites géométriques passant par les sections des parties des ailettes de guidage (33) là où la largeur est la plus étroite, sont placées sur les surfaces latérales en saillie des lignes parallèles (L2) qui sont des lignes droites géométriques ayant une relation de parallélisme avec les lignes centrales (L1) et qui passent par le noyau de la partie-tige (32), et
si l'ensemble des parties des ailettes de guidage (33) est divisé en deux le long des lignes parallèles (L2), les parties des ailettes de guidage (33) ont des formes asymétriques,
pompe **caractérisée en ce que** les parties des ailettes de guidage (33) ont la même largeur à partir de leur partie d'extrémité inférieure dans la direction axiale, au moins pour les parties centrales dans la direction axiale, la largeur des parties des ailettes de guidage (33) augmentant en s'approchant de la partie de siège (31).

3. Pompe haute-pression (50) selon la revendication 1 ou 2, **caractérisée en ce que**
les parties des ailettes de guidage (33) sont formées par découpe en utilisant une meule (90),
le degré de projection des surfaces en saillie (33b) est réglé en réglant le degré de pénétration de la meule (90) dans la direction axiale de l'élément de soupape (30), et la largeur est réglée en réglant le degré de pénétration de la meule (90) dans la direction radiale de l'élément de soupape (30).

4. Pompe haute-pression (50) selon l'une quelconque des revendications 1 à 3, **caractérisée en ce que** la pompe haute-pression (50) est une pompe utilisée dans un système d'injection de carburant à accumulateur (10).
